(19) Europäisches Patentamt

European Patent Office

Office européen des brevets

(11) **EP 0 984 546 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.7: **H02K 13/10**, H01R 39/18

(21) Anmeldenummer: **99117192.7**

(22) Anmeldetag: **01.09.1999**

(54) **Einlaufverfahren für Kohlebürsten in Permanentmagnetmotoren**

Running-in procedure for carbon brushes in permanent magnet motors

Procédé de rodage pour des balais de moteurs à aimants permanents

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **02.09.1998 DE 19840053**

(43) Veröffentlichungstag der Anmeldung:
**08.03.2000 Patentblatt 2000/10**

(73) Patentinhaber: **Berghänel Elektrotechnik 09119 Chemnitz (DE)**

(72) Erfinder: **Berghänel, Dietmar, Dipl.-Ing. 09119 Chemnitz (DE)**

(74) Vertreter: **Seerig & Hübner Patentanwälte, Postfach 213 09026 Chemnitz (DE)**

(56) Entgegenhaltungen:
**EP-A- 0 647 012      DE-A- 1 638 270**
**US-A- 5 723 932**

- SHIMODA N ET AL: "A STUDY ON COMMUTATION ARC AND WEAR OF BRUSH IN GASOLINE OF D.C. MOTOR" PROCEEDINGS OF THE HOLM CONFERENCE ON ELECTRICAL CONTACTS,US,NEW YORK, IEEE, Bd. CONF. 39, 27. September 1993 (1993-09-27), Seiten 151-156, XP000419866
- YAMAMOTO T ET AL: "A STUDY ON BRUSH WEAR UNDER COMMUTATION ARCS IN GASOLINE" IEEE TRANSACTIONS ON COMPONENTS, PACKAGING AND MANUFACTURING TECHNOLOGY: PART A,US,IEEE SERVICE CENTER, PISCATAWAY, NJ, Bd. 19, Nr. 3, 1. September 1996 (1996-09-01), Seiten 376-383, XP000624143 ISSN: 1070-9886

**Beschreibung**

Die Erfindung betrifft ein Einlaufverfahren für Kohlebürsten in Permanentmagnetmotoren, die in hohen Stückzahlen gefertigt und beispielsweise in elektrischen Hausgeräten, Büromaschinen, Kleinantrieben und Elektrowerkzeugen eingesetzt werden

Es ist bekannt, Kommutatoren zur Vergrößerung des mechanischen Bürstenverschleißes einzeln vor dem Einlaufen oder gemeinsam mit der Kohlebürste während des Einlaufens mit einem quarzhaltigen Schleifmittel, zum Beispiel Bimsstein, zu behandeln. Nachteilig an diesem bekannten Verfahren sind die hohen Anschaffungs- und Wartungskosten (infolge Verschmutzung) derartiger Anlagen. Es können auch Schädigungen durch Quarzstäube der in den Motoren eingesetzten Lager auftreten und zu einer Verkürzung der Lebensdauer führen.

Es ist auch bekannt, elektrische Motoren beim Einlaufen mechanisch zu belasten (zum Beispiel mit Lüfterrädern), um das Einlaufen zu beschleunigen. Nachteilig an diesem Verfahren ist der große mechanische und zeitliche Aufwand für die mit Taktzeiten von 10s und weniger gefertigten Motoren.

Es ist weiterhin bekannt, Kommutatormaschinen mit höheren Frequenzen einlaufen zu lassen, die ein Vielfaches der Netzfrequenz betragen. Dieses Verfahren ist für elektromagnetisch erregte Motoren vorteilhaft, aber für permanentmagneterregte Motoren ungeeignet.

Es ist auch bekannt, Motoren mit Überspannung einlaufen zu lassen. Es sind aber in diesem Fall Grenzen durch die elektrische und mechanische Belastungsfähigkeit des Motors gesetzt.

Weiter ist es bekannt, Motoren bei Oberwellenbetrieb und Unterspannung einlaufen zu lassen, EP-A-0,647,012, Aufgabe der Erfindung ist ein Verfahren zur Anpassung des Laufradius von Kohlebürsten an den Kommutator von kleinen Kommutatormaschinen mit Permanenterregung, um in kurzer Einlaufzeit die Bemessungsparameter und eine niedrige Geräuschemission der Motoren zu erreichen.

Erfindungsgemäß wird die Aufgabe durch die Merkmale des Hauptanspruches gelöst. Ausgestaltungen der Erfindung sind in den Unteransprüchen dargestellt

Der Vorteil der Erfindung besteht darin, daß der effektive Betriebsstrom als eine für den Bürstenverschleiß maßgebliche Größe erhöht wird, ohne daß eine unzulässige große mechanische Belastung des Rotors erfolgt. Die anzustrebende Erhöhung des effektiven Betriebsstromes erfolgt auch nicht durch eine Anhebung der Betriebsspannung und der damit unzulässigen Erhöhung der Ankerdrehzahl, sondern durch die mit einer sehr niedrigen Frequenz ihre Polarität ändernde Betriebsspannung. Mit jedem Wechsel der Polarität ist ein dem Einschaltstrom ähnlicher Stromverlauf verbunden, so daß trotz niedriger Drehzahl und fehlender äußerer Belastung die Strom-Zeit-Fläche größer ist als im monopolaren Betrieb und durch größeren Bürstenverschleiß eine kürzere Einlaufzeit erreicht wird.

Vorteilhaft ist auch, daß das erfindungsgemäße Verfahren mit anderen Einlaufhilfen oder -verfahren kombinierbar ist.

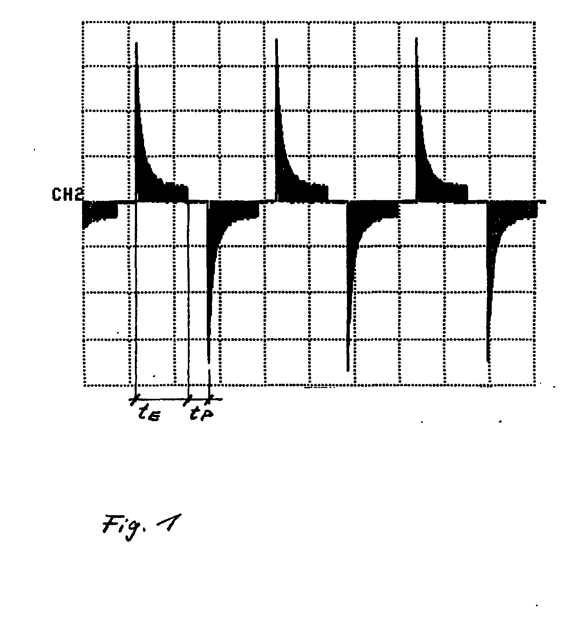

Die Erfindung wird nachfolgend anhand eines Ausführungsbeispieles erläutert. Die dazugehörige Zeichnung Fig. 1 zeigt den Stromverlauf eines zu ständiger Drehrichtungsumkehr gezwungenen Motors.

Der Kohlebürstenverschleiß $V_{gesamt}$ einer elektrischen Kommutatormaschine ist die Summe von Einzelverschleißen.

$$V_{gesamt}=V_{mechanisch}+V_{Strom}+V_{Lichtbogen}$$

Dieser Gesamtverschleiß soll in der Einlaufphase besonders groß sein, um ein schnelles Einlaufen der Kohlebürsten ohne schädigende Nebenwirkungen zu gestatten. Erfindungsgemäß wird von der Überlegung ausgegangen, den stromabhängigen Verschleißanteil $V_{Strom}$ zu erhöhen. Infolge periodisch fließender Einschaltströme mit einer Frequenz von beispielsweise 1Hz oder mehr oder weniger erhöt sich der quadratische Mittelwert des Betriebsstromes und wirkt verschleißfördernd. Der mechanische Verschleißanteil ($V_{mech}$) kann über die Anzahl der Umrehungen des Kommutators ebenfalls beeinflußt werden. Auch der Lichtbogenverschleiß ($V_{Lichtbogen}$) wird durch diese Verfahrensweise größer und wirkt verschleißfördernd im Sinne dieses Verfahrens. Frequenz, Amplitude, Tastzeit (Einschaltzeit $t_E$) und Intervalldauer (Einschaltzeit $t_E$ + Umschaltzeit $t_P$) der Betriebsspannung sowie die gewählten Kurvenverläufe beeinflussen die vorgenannten Verschleißgrößen. Damit wird das Verfahren innerhalb der zulässigen Grenzen mechanischer und elektrischer Belastung des Motors anwendbar.

Die Verläufe der Betriebsspannung können zum Beispiel Rechteckform haben oder Kreisfunktionen sein, es sind aber auch andere beliebig wählbare Kurvenverläufe möglich.

Der Gleichstrommittelwert der Betriebsspannung kann den Wert Null haben, in bestimmten Anwendungsfällen aber auch verschieden von Null sein.

Das Verfahren ist auch für Kommutatormaschinen mit Statorwicklung (Universalmotoren) anwendbar, wenn eine Drehrichtungsumkehr durch elektrische Schaltung in der zeitlichen Nähe des Nulldurchgangs der Versorgungsspannung erfolgt. Insbesondere Motoren, die im Nennbetrieb reversieren (z. B. Waschmaschinenantriebe), laufen bei diesem Verfahren in beiden Drehrichtungen in kurzer Zeit ein.

Für Methoden zur Prüfung der Motorparameter während des Einlaufens und am Ende des Einlaufens ist das erfindungsgemäße Verfahren durch Messung und Verarbeitung der im Betriebsstrom und insbesondere im Einschaltstrom enthaltenen Informationen besonders gut geeignet.

**Patentansprüche**

1. Einlaufverfahren für Kohlebürsten in Permanentmagnetmotoren, bei dem der Bürstenverschleiß in der Einlaufphase durch periodische Erzeugung eines Einschaltstromes und damit einer Erhöhung des quadratischen Strommittelwertes innerhalb zulässiger mechanischer Belastung intensiviert wird.

2. Verfahren nach Anspruch 1 **dadurch gekennzeichnet, daß** mit Frequenz, Amplitude, Tastzeit und Intervalldauer der stromversorgenden Betriebsspannung die gewünschten Einlaufparameter des Motors einstellbar und damit der mechanische Verschleiß, der stromabhängige Verschleiß und der Lichtbogenverschleiß beeinflußbar sind.

3. Verfahren nach Anspruch 1 oder 2, **dadurch gekennzeichnet, daß** die Kurvenform der stromversorgenden Betriebsspannung den Einlauferfordernissen entsprechend beliebig wählbar sein kann.

4. Verfahren nach einem der Ansprüche 1 bis 3, **dadurch gekennzeichnet, daß** die Frequenz der stromversorgenden Betriebsspannung so klein ist, daß der Rotor zwischen zwei benachbarten Nulldurchgängen eine beliebig wählbare, unganzzahlige Anzahl von Umdrehungen macht.

5. Verfahren nach einem der Ansprüche 1 bis 4, **dadurch gekennzeichnet, daß** der Gleichstrommittelwert der stromversorgenden Betriebsspannung den Wert Null haben aber auch verschieden von Null sein kann.

6. Verfahren nach einem der Ansprüche 1 bis 5, **dadurch gekennzeichnet, daß** auch Motoren mit elektromagnetischer Erregung bei entsprechender elektrischer Umschaltung von Stator- und Rotorwicklung auf diese Weise einlaufen können.

7. Verfahren nach einem der Ansprüche 1 bis 6, **dadurch gekennzeichnet, daß** das Verfahren mit anderen bekannten Einlaufverfahren kombinierbar ist.

8. Verfahren nach einem der Ansprüche 1 bis 7, **dadurch gekennzeichnet, daß** die Prüfung der Motorparameter während des Einlaufens und am Ende durch eine Stromanalyse erfolgen kann.

**Claims**

1. Running-in method for carbon brushes in permanent magnet motors, in which the brush wear is intensified in the running-in phase by the periodic production of a starting current resulting in an increase in the root mean square value of the current within the permissible mechanical loading.

2. Method according to Claim 1, **characterized in that** the desired running-in parameters of the motor can be adjusted in terms of the frequency, amplitude, contact time and interval duration of the operating voltage that supplies the current and thus the mechanical wear, the current-dependent wear and the wear due to arcing can be affected.

3. Method according to Claim 1 or 2, **characterized in that** it may be possible to arbitrarily choose the shape of the curve of the operating voltage that supplies the current according to the running-in requirements.

4. Method according to one of Claims 1 to 3, **characterized in that** the frequency of the operating voltage that supplies the current is sufficiently low that the rotor makes an arbitrarily selectable, non-integer number of revolutions between two adjacent zero crossings.

5. Method according to one of Claims 1 to 4, **characterized in that** the DC mean value of the operating voltage that supplies the current can have a value zero but can also be other than zero.

6. Method according to one of Claims 1 to 5, **characterized in that** motors with electromagnetic excitation can also run in in this manner with appropriate electrical switching-over of stator and rotor windings.

7. Method according to one of Claims 1 to 6, **characterized in that** the method can be combined with other known running-in methods.

8. Method according to one of Claims 1 to 7, **characterized in that** the motor parameters can be checked during running-in and at the end by means of an analysis of the current.

**Revendications**

1. Procédé de rodage pour des balais de charbon de moteurs à aimants permanents, dans lequel l'usure des balais dans la phase de rodage est accentuée par la génération périodique d'un courant de démarrage et donc d'une augmentation de la moyenne de courant quadratique dans les limites d'une charge mécanique admissible.

2. Procédé selon la revendication 1, **caractérisé en**

**ce que** les paramètres de rodage souhaités du moteur peuvent être ajustés en fréquence, amplitude, durée de cycle et durée d'intervalle de la tension de fonctionnement d'alimentation et de ce fait l'usure mécanique, l'usure en fonction du courant et l'usure due à l'arc électrique peuvent être influencées.

3. Procédé selon la revendication 1 ou 2, **caractérisé en ce que** la forme de la courbe de la tension de fonctionnement d'alimentation peuvent être sélectionnée de manière quelconque en fonction des exigences de rodage.

4. Procédé selon l'une quelconque des revendications 1 à 3, **caractérisé en ce que** la fréquence de la tension de fonctionnement d'alimentation est si faible que le rotor entre deux passages à zéro effectue un nombre non entier de rotations sélectionnable au choix.

5. Procédé selon l'une quelconque des revendications 1 à 4, **caractérisé en ce que** la moyenne de courant continu de la tension de fonctionnement d'alimentation peut avoir la valeur zéro ou peut aussi être différente de zéro.

6. Procédé selon l'une quelconque des revendications 1 à 5, **caractérisé en ce que** des moteurs à excitation électromagnétique peuvent aussi être rodés avec une inversion électrique correspondante de l'enroulement du stator et du rotor.

7. Procédé selon l'une quelconque des revendications 1 à 6, **caractérisé en ce que** le procédé peut être combiné à d'autres procédés de rodage connus.

8. Procédé selon l'une quelconque des revendications 1 à 7, **caractérisé en ce que** la vérification des paramètres du moteur peut s'effectuer pendant le rodage et à la fin, par une analyse du courant.

Fig. 1